# EUROPEAN PATENT SPECIFICATION

(11) **EP 2 584 179 B1**
(45) Date of publication and mention of the grant of the patent: **16.05.2018**
(21) Application number: 10853231.8
(22) Date of filing: 16.06.2010
(51) Int. Cl.: F02D 13/02, F02D 41/10, F02D 45/00

(54) **CONTROL DEVICE FOR INTERNAL COMBUSTION ENGINE**
STEUERUNGSVORRICHTUNG FÜR EINEN VERBRENNUNGSMOTOR
DISPOSITIF DE COMMANDE POUR MOTEUR À COMBUSTION INTERNE

(43) Date of publication of application: 24.04.2013
(73) Proprietor: TOYOTA JIDOSHA KABUSHIKI KAISHA, Toyota-shi, Aichi-ken, 471-8571 (JP)
(72) Inventor: ITO, Katsuhiro, Toyota-shi, Aichi-ken 471-8571 (JP); OGAWA, Takashi, Toyota-shi, Aichi-ken 471-8571 (JP); KOGO, Tomoyuki, Toyota-shi, Aichi-ken 471-8571 (JP); IWATA, Kazuyasu, Toyota-shi, Aichi-ken 471-8571 (JP); ISHIYAMA, Shinobu, Toyota-shi, Aichi-ken 471-8571 (JP); YANASE, Yoshinori, Toyota-shi, Aichi-ken 471-8571 (JP)
(74) Representative: Intès, Didier Gérard André
(86) International application number: PCT/JP2010/060229
(87) International publication number: WO 2011/158349

(56) References cited:
- JP-A- 2000 087 769
- JP-A- 2002 089 304
- JP-A- 2005 030 221
- JP-A- 2005 337 077
- JP-A- 2007 297 992
- JP-A- 2008 215 216
- US-A1- 2004 216 707
- US-A1- 2010 116 232

## Description

### Technical Field

The present invention relates to a control apparatus for an internal combustion engine.

### Background Art

Conventionally, for example, Patent Document 1 discloses a control apparatus for an internal combustion engine including a hydraulic type variable phase mechanism that makes a rotation phase of an intake cam (central phase of an operating angle of an intake valve) variable, and an electric type variable lift amount mechanism that is higher in response speed than the variable phase mechanism and makes a lift amount and the operating angle of the intake valve variable. When a valve opening characteristic of the intake valve is switched to a target valve opening characteristic at a transition time of the internal combustion engine by using these two variable mechanisms, a deviation with respect to the target valve opening characteristic (more specifically, a deviation of a closing timing or the like of the intake valve) occurs to the valve opening characteristic of the intake valve due to a difference in response speed. The above described conventional control device suppresses the deviation of the valve opening characteristic of the intake valve with respect to the target valve opening characteristic by forcefully delaying the change of the target lift amount of the variable lift amount mechanism that is a variable mechanism with a higher response speed. Patent Document 4 discloses a control apparatus that gives priority to using one of a variable phase mechanism and a variable lift mechanism in order to suppress deviation of a valve opening characteristic of the intake valve with respect to a target valve opening characteristic.

The applicant recognizes the documents described as follows including the above described document, as the documents related to the present invention.

### Citation List

### Patent Documents

Patent Document 1: Japanese Laid-open Patent Application Publication No. 2005-30221
Patent Document 2: Japanese Laid-open Patent Application Publication No. 2006-274977
Patent Document 3: Japanese Laid-open Patent Application Publication No. 2007-92616
Patent Document 4: Japanese Laid-open Patent Application Publication No. 2000-087769

### Summary of Invention

### Technical Problem

However, when the change of the target lift amount of the variable lift amount mechanism is to be delayed in order to suppress the deviation of the closing timing of the intake valve with respect to the target value as in the above described conventional technique, the lift amount of the intake valve deviates from the target lift amount. As a result, depending on the operation region of the internal combustion engine, a harmful effect due to worsening of the exhaust emission caused by the deviation of the lift amount of the intake valve may become larger than the effect of suppressing worsening of exhaust emission by correction of the deviation of the closing timing of the intake valve.

The present invention has been made to solve the problem as described above, and has its object to provide a control apparatus for an internal combustion engine which can favorably suppress worsening of exhaust emission due to a deviation of a closing timing of an intake valve with respect to a target value that is caused by a difference in response speed between a variable phase mechanism and a variable lift amount mechanism, and worsening of exhaust emission due to a deviation of a lift amount of the intake valve with respect to a target value that occurs when performing correction of the above described deviation of the closing timing of the intake valve, irrespective of an operation region of the internal combustion engine.

### Solution to Problem

A first aspect of the present invention is a control apparatus for an internal combustion engine, comprising:
a variable phase mechanism that makes a rotation phase of an intake cam that drives an intake valve variable with respect to a rotation phase of a crankshaft;
a variable lift amount mechanism that is higher in response speed than the variable phase mechanism, and makes a lift amount and an operating angle of the intake valve variable; and
intake valve control means that controls, at a transition time at which an operation state of the internal combustion engine changes, the rotation phase of the intake cam, and the lift amount and the operating angle of the intake valve by using both of the variable phase mechanism and the variable lift amount mechanism so that a valve opening characteristic of the intake valve becomes a target valve opening characteristic,
wherein the intake valve control means includes means for determining engine operation region and/or for estimating exhaust emission and priority control executing means that selects and executes, out of a closing timing priority control that puts priority on compliance of a closing timing of the intake valve to a target value by regulation of the operating angle of the intake valve with use of the variable lift amount mechanism, and a lift amount priority control that puts priority on compliance of the lift amount of the intake valve to a target value with use of the variable lift amount mechanism, the most effective in suppressing an exhaust emission, based on the determined operating region and/or the estimated exhaust emission.

The second aspect of the present invention is the control apparatus for an internal combustion engine according to the first aspect of the present invention, further comprising:
smoke estimating means that estimates an emission amount of smoke exhausted from the internal combustion engine,
wherein the priority control executing means selects and executes the lift amount priority control, when the emission amount of the smoke is larger than a predetermined value.

The third aspect of the present invention is the control apparatus for an internal combustion engine according to the second aspect of the present invention,
wherein when an engine speed is a predetermined value or more in a case in which the emission amount of the smoke is the predetermined value or less, the priority control executing means selects and executes the lift amount priority control instead of the closing timing priority control.

The fourth aspect of the present invention is the control apparatus for an internal combustion engine according to the first aspect of the present invention, further comprising:
HC estimating means that estimates an emission amount of HC exhausted from the internal combustion engine,
wherein when the emission amount of the HC is larger than a predetermined value, the priority control executing means selects and executes the closing timing priority control.

The fifth aspect of the present invention is the control apparatus for an internal combustion engine according to the fourth aspect of the present invention,
wherein when an engine speed is a predetermined value or more in a case in which the emission amount of the HC is larger than the predetermined value, the priority control executing means selects and executes the lift amount priority control instead of the closing timing priority control.

The second aspect of the present invention is the control apparatus for an internal combustion engine according to the first aspect of the present invention,
wherein the priority control executing means selects and executes the closing timing priority control in a low-load and low-rotation region of the internal combustion engine.

The seventh aspect of the present invention is the control apparatus for an internal combustion engine according to the first or sixth aspect of the present invention,
wherein the priority control executing means selects and executes the lift amount priority control in a high load region of the internal combustion engine.

The eighth aspect of the present invention is the control apparatus for an internal combustion engine according to the first, sixth or seventh aspect of the present invention,
wherein the priority control executing means selects and executes the lift amount priority control in a high rotation region of the internal combustion engine.

Cancelled

### Advantageous Effects of Invention

According to the first aspect of the present invention, at the transition time, more effective control in the present operation region in reducing the exhaust emission at the transition time is selected and executed, out of the closing timing priority control and the lift amount priority control. Therefore, according to the present invention, worsening of the exhaust emission due to the deviation of the closing timing of the intake valve with respect to the target value that is caused by the difference in response speed between the variable phase mechanism and the variable lift mechanism, and worsening of the exhaust emission due to the deviation of the lift amount of the intake valve with respect to the target value that occurs when performing correction of the above described deviation of the closing timing of the intake valve can be favorably suppressed irrespective of the operation region of the internal combustion engine.

According to the second aspect of the present invention, when the smoke emission amount is larger than the above described predetermined value, a suitable intake air quantity is secured at the transition time by the lift amount priority control, whereby the smoke emission amount can be reduced.

According to the third aspect of the present invention, the compliance of the lift amount of the intake valve to the target value is enhanced in the high rotation region, whereby excessive increase of swirl strength and insufficiency of the compression end pressure in the high rotation region are avoided, and reduction of the HC emission amount can be achieved.

According to the fourth aspect of the present invention, when the HC emission amount is larger than the above described predetermined value, a suitable actual compression ratio is secured at the transition time by the closing timing priority control, whereby the HC emission amount can be reduced.

According to the fifth aspect of the present invention, the compliance of the lift amount of the intake valve to the target value is enhanced in the high rotation region, whereby excessive increase of swirl strength and insufficiency of the compression end pressure in the high rotation region are avoided, and reduction of the HC emission amount can be achieved.

According to the sixth aspect of the present invention, the closing timing priority control is executed in the low-load and low-rotation region, whereby worsening of the HC emission amount due to the deviation of the closing timing of the intake valve with respect to the target value can be suppressed.

According to the seventh aspect of the present invention, the lift amount priority control is executed in the high load region, whereby a suitable intake air quantity can be secured at the transition time, and the smoke emission amount can be reduced.

According to the eighth aspect of the present invention, the lift amount priority control is executed in the high rotation region, whereby excessive increase of the swirl strength and insufficiency of the compression end pressure in the high rotation region are avoided, and reduction of the HC emission amount can be realized.

Cancelled

### Brief Description of Drawings

Fig. 1 is a diagram for explaining a system configuration according to a first embodiment of the present invention;
Fig. 2 is a diagram showing a valve lift characteristic of an intake valve that are realized by the intake variable valve operating mechanism shown in Fig. 1;
Fig. 3 is a time chart for explaining a deviation of the closing timing IVC of the intake valve with respect to a target value, which occurs when valve opening characteristics of the intake valve are switched by using both of a variable phase mechanism and a variable lift amount mechanism at the transition time;
Fig. 4 is a diagram for explaining operation regions using an IVC priority control and a lift amount priority control;
Fig. 5 is a flowchart of a routine that is executed in the first embodiment of the present invention;
Fig. 6 is a time chart for explaining the operation at execution of the routine shown in Fig. 5 and the effects thereof;
Fig. 7 is a flowchart of a routine that is executed in a second embodiment of the present invention;
Fig. 8 is a flowchart of a routine that is executed in a third embodiment of the present invention;
Fig. 9 is a flowchart of a routine that is executed in a comparative example;
Fig. 10 is a view for explaining respective estimation methods of a compression end temperature, a compression end pressure and swirl strength; and
Fig. 11 is a diagram for explaining a calculating method of the optimal lift amount of the intake valve in the transition time.

### Description of Embodiments

### First Embodiment

### [System configuration of first embodiment]

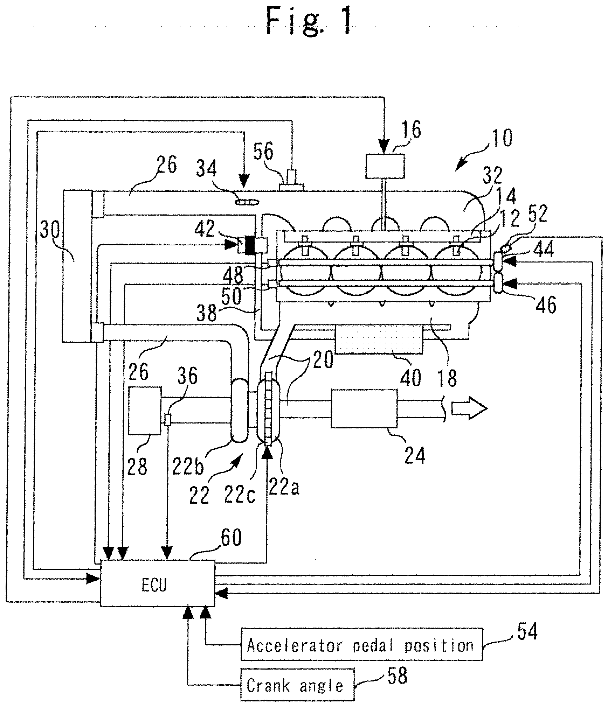

Fig. 1 is a diagram for explaining a system configuration according to the first embodiment of the present invention. A system shown in Fig. 1 includes an internal combustion engine 10. Here, the internal combustion engine 10 is a four-cycle diesel engine (compression ignition internal combustion engine) 10, and is mounted in a vehicle and used as a power source thereof. The internal combustion engine 10 of the present embodiment is of an in-line four-cylinder type, but the number of cylinders and the cylinder arrangement of the internal combustion engine in the present invention are not limited to this.

An injector 12 that directly injects a fuel into a cylinder is installed in each of the cylinders of the internal combustion engine 10. The injectors 12 of the respective cylinders are connected to a common rail 14 common thereto. A highpressure fuel that is pressurized by a supply pump 16 is stored in the common rail 14. The fuel is supplied to the injectors 12 of the respective cylinders from the common rail 14. Exhaust gases that are discharged from the respective cylinders are gathered by an exhaust manifold 18 and flow into an exhaust passage 20.

The internal combustion engine 10 includes a variable nozzle type turbo supercharger 22. The turbo supercharger 22 has a turbine 22a that is operated by the exhaust energy of an exhaust gas, and a compressor 22b that is integrally connected to the turbine 22a and is rotationally driven by the exhaust energy of an exhaust gas that is inputted into the turbine 22a. Further, the turbo supercharger 22 has a variable nozzle (VN) 22c for regulating a flow rate of the exhaust gas that is supplied to the turbine 22a.

The turbine 22a of the turbo supercharger 22 is disposed at some point in the exhaust passage 20. In the exhaust passage 20 at a downstream side from the turbine 22a, an exhaust gas purifier 24 that is capable of purifying an exhaust gas is installed.

In the vicinity of an inlet of an intake passage 26 of the internal combustion engine 10, an air cleaner 28 is provided. The air that is taken in through the air cleaner 28 is compressed by the compressor 22b of the turbo supercharger 22, and thereafter, cooled by an intercooler 30. The intake air that passes through the intercooler 30 is divided by an intake manifold 32, and flows into each of the cylinders. An intake throttle valve 34 is installed between the intercooler 30 and the intake manifold 32 in the intake passage 26. Further, in the vicinity of a downstream side of the air cleaner 28 in the intake passage 26, an air flow meter 36 that detects an intake air quantity is installed.

One end of an EGR passage 38 is connected to a vicinity of the intake manifold 32. The other end of the EGR passage 38 is connected to the exhaust manifold 18 of the exhaust passage 20. At some point in the EGR passage 38, an EGR cooler 40 for cooling an EGR gas that flows in the EGR passage 38 is provided. An EGR valve 42 is provided downstream of the EGR cooler 40 in the EGR passage 38.

Further, the internal combustion engine 10 includes an intake variable valve operating mechanism 44 that makes a valve opening characteristic of an intake valve (not illustrated) variable, and an exhaust variable valve operating mechanism 46 that makes an valve opening characteristic of an exhaust valve (not illustrated) variable. More specifically, the intake variable valve operating mechanism 44 is a mechanism including a hydraulic type variable phase mechanism (variable valve timing mechanism) that makes a rotation phase of an intake cam with respect to a rotation phase of a crankshaft continuously variable, and a variable lift amount mechanism that makes a lift amount and an operating angle of the intake valve continuously variable. A variable valve operating mechanism having a configuration similar to the variable lift amount mechanism like this is described in detail in, for example, International Publication No. WO 2006/132059 of international application, and therefore, the detailed description thereof will be omitted here. Further, the exhaust variable valve operating mechanism 46 similarly includes the above described variable phase mechanism.

Further, the variable valve operating mechanisms 44 and 46 respectively include an intake cam angle sensor 48 and an exhaust cam angle sensor 50 for sensing rotation phases of the intake cam and the exhaust cam. Further, the intake variable valve operating mechanism 44 includes a lift amount sensor 52 for sensing a lift amount (operating angle) of the intake valve.

Further, the system of the present embodiment includes an accelerator opening sensor 54 for sensing a depression amount of an accelerator pedal (accelerator pedal position) of a vehicle equipped with the internal combustion engine 10, an intake pressure sensor 56 for sensing an intake manifold pressure (intake pressure), and a crank angle sensor 58 for sensing a crank angle and an engine speed.

Further, the system of the present embodiment includes an ECU (Electronic Control Unit) 60. Further, the above described various sensors and actuators are connected to the ECU 60. The ECU 60 controls an operation state of the internal combustion engine 10 by actuating each of the actuators in accordance with the output of each sensor and with predetermined programs.

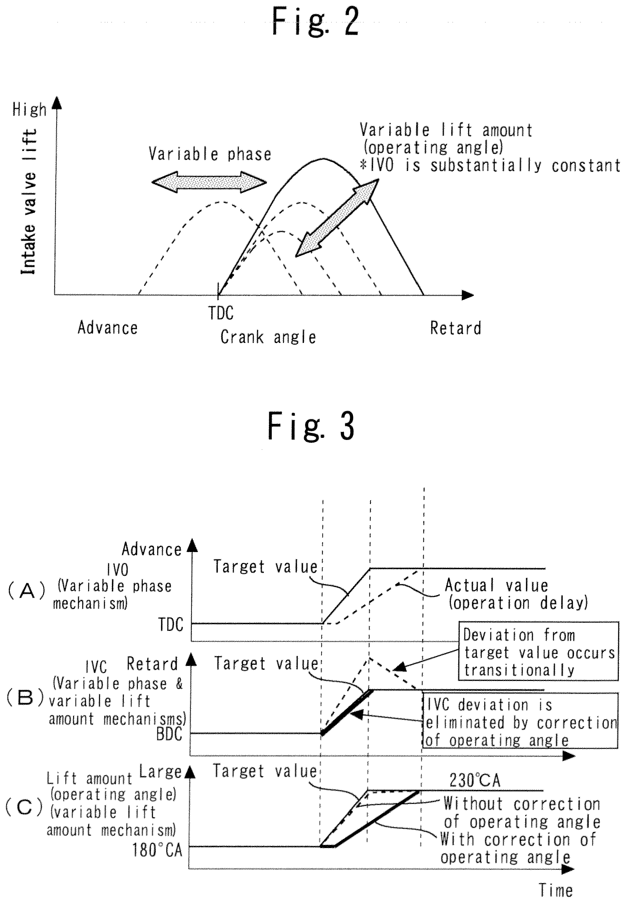

Fig. 2 is a diagram showing a valve lift characteristic of the intake valve that are realized by the intake variable valve operating mechanism 44 shown in Fig. 1.

The aforementioned variable phase mechanism that is included by the intake variable valve operating mechanism 44 is configured to be capable of relatively changing the rotation phase of the intake cam with respect to the rotation phase of the crankshaft by using a hydraulic type actuator not illustrated based on a drive signal (target phase) from the ECU 60. Therefore, according to the variable phase mechanism, opening and closing timings of the intake valve can be continuously changed while the operating angle of the intake valve is kept constant, as shown in Fig. 2.

Further, the aforementioned variable lift amount mechanism that is included by the intake variable valve operating mechanism 44 is configured to be capable of continuously changing the lift amount and the operating angle of the intake valve while fixing an opening timing of the intake valve (IVO) to a substantially constant value as shown in Fig. 2 by rotationally driving a control shaft not illustrated by using an actuator (electric motor) not illustrated based on a drive signal (target lift amount) from the ECU 60. According to the variable lift amount mechanism like this, the closing timing of the intake valve can be continuously changed while the opening timing of the intake valve (IVO) is fixed to a substantially constant value.

According to the intake variable valve operating mechanism 44 including the variable phase mechanism and the variable lift amount mechanism described above, the variable phase mechanism and the variable lift amount mechanism are simultaneously controlled, whereby while the opening timing of the intake valve (IVO) is regulated by the variable phase mechanism and the lift amount is regulated by the variable lift amount mechanism, the closing timing IVC of the intake valve can be regulated by cooperation of these variable mechanisms. By combining the variable phase mechanism and the variable lift amount mechanism like this, the valve opening characteristics (the opening timing, the closing timing and the lift amount (operating angle)) of the intake valve can be controlled to proper values corresponding to each operation region of the internal combustion engine 10.

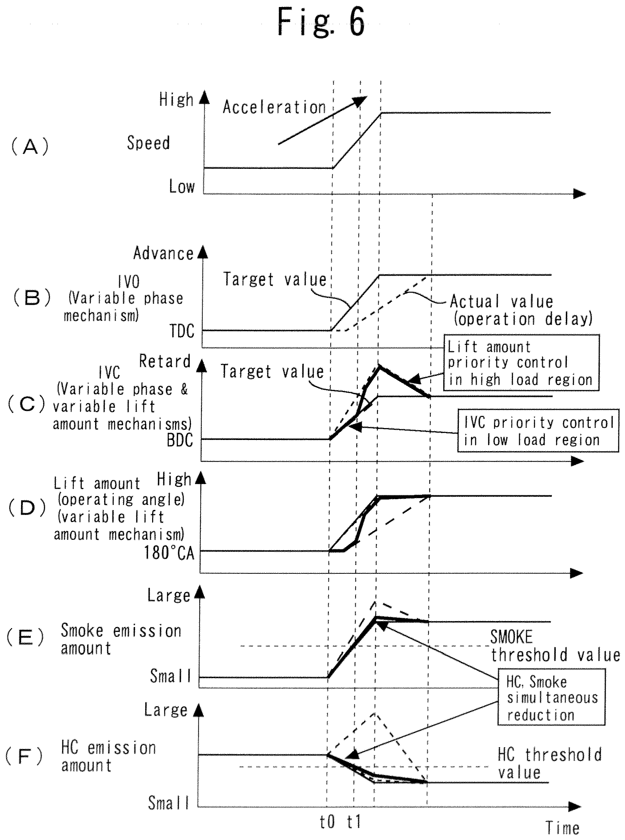

Fig. 3 is a time chart for explaining a deviation of the closing timing IVC of the intake valve with respect to a target value, which occurs when the valve opening characteristics of the intake valve are switched by using both of the variable phase mechanism and the variable lift amount mechanism at the transition time. More specifically, Fig. 3(A) shows a waveform expressing a change of the opening timing (IVO) of the intake valve which is regulated by the variable phase mechanism, Fig. 3(B) shows a waveform expressing a change of the closing timing IVC of the intake valve as the result of regulation of the variable phase mechanism and the variable lift amount mechanism, and Fig. 3(C) shows a waveform expressing a change of an operating angle (lift amount) of the intake valve which is regulated by the variable lift amount mechanism. Further, one example at the transition time shown in Fig. 3 shows a control example at a time of shift from a low load region to an intermediate load region. In the low load region before the shift, the closing timing IVC is set at the intake bottom dead center in order to enhance the actual compression ratio with the objective of suppressing emission of HC. In the intermediate load region after the shift, the opening timing IVO is retarded in order to enhance swirl, and the closing timing IVC is delayed in order to enhance the intake air quantity. In the respective drawings in Fig. 3, thin solid lines correspond to the respective target values, broken lines correspond to the respective actual values, and thick solid lines correspond to the respective actual values in the case of correction of the operating angles being made. This also applies to Fig. 6 which will be described later.

The variable phase mechanism is of a hydraulic type, and therefore, a response speed thereof is low. Accordingly, as shown in Fig. 3(A), an operation delay with respect to the target value occurs to the change of the opening timing (IVO) of the intake vale at the transition time. Meanwhile, the variable lift amount mechanism is of an electric type, and therefore, a response speed thereof is relatively high. Accordingly, as shown in Fig. 3(C), an operation delay with respect to the target value hardly occurs to the change of the operating angle (lift amount) of the intake valve at the transition time. As a result, when the valve opening characteristic of the intake valve is switched to the target valve opening characteristic at the transition time by using both of the variable phase mechanism and the variable lift amount mechanism which differ in response speed like this, a deviation with respect to the target value transitionally occurs to the closing timing IVC as shown in Fig. 3(B). More specifically, in the case of Fig. 3, a deviation to a retard angle side with respect to the target value transitionally occurs to the closing timing IVC.

When the above described deviation of the closing timing IVC occurs in, for example, the low-load and low-rotation region of the internal combustion engine 10, an actual compression ratio (a compression end pressure and a compression end temperature) is reduced to be lower than the target value. As a result, it is feared that an HC emission amount is worsened and a misfire occurs. Thus, as shown by the thick solid line in Fig. 3(C), the response of the operating angle which is controlled by the variable lift amount mechanism is delayed similarly to the response of the variable phase mechanism, whereby the deviation of the above described closing timing IVC can be eliminated as shown in Fig. 3(B).

However, when the operating angle is corrected by using the variable lift amount mechanism in order to suppress the deviation of the closing timing IVC of the intake valve with respect to the target value, as described above, the lift amount is deviated from the target value. As a result, depending on the operation region of the internal combustion engine 10, the harmful effect due to worsening of the exhaust emission (smoke or HC) caused by the deviation of the lift amount sometimes becomes larger than the effect of suppressing worsening of exhaust emission (HC) by correction of the deviation of the closing timing IVC.

Explaining in more detail, if the above described correction of the operating angle is executed in order to suppressing the above described deviation of the closing timing IVC in the load region with an intermediate load or more in which the possibility of occurrence of a misfire is low, the smoke emission amount is worsened due to reduction of the cylinder inflow fresh air amount associated with reduction of the lift amount. Further, in the high rotation region even in the low load region, if the above described correction of the operating angle is performed in order to suppress the above described deviation of the closing timing IVC, the HC emission amount becomes worse on the contrary due to excessive increase of the swirl strength and insufficiency of the compression end pressure that associated with reduction of the lift amount.

### [Characteristic control in first embodiment]

Here, control that puts priority on compliance of the closing timing IVC with respect to the target value at the transition time by correcting the above described deviation of the closing timing IVC by regulation of the operating angle using the variable lift amount mechanism will be called "closing timing priority control (IVC priority control)". Meanwhile, control that puts priority on compliance of the lift amount with respect to the target value at the transition time without performing correction of the above described deviation of the closing timing IVC by regulation of the operating angle will be called "lift amount priority control".

In the present embodiment, when the valve opening characteristic of the intake valve is switched to the target opening valve characteristic at the transition time by using both of the variable phase mechanism and the variable lift amount mechanism, the control that is more effective for reduction of the exhaust emission is selected and executed, out of the above described IVC priority control and the above described lift amount priority control.

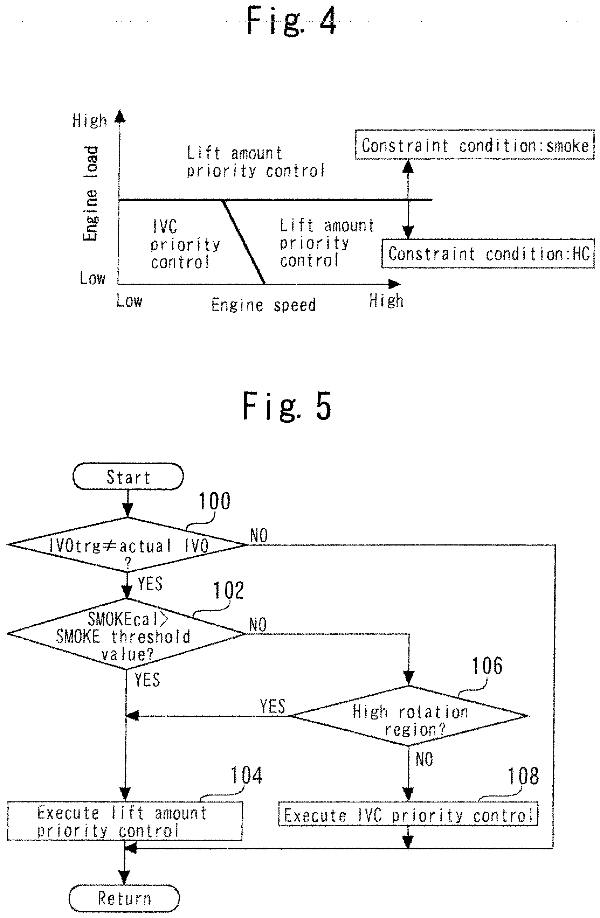

Fig. 4 is a diagram for explaining operation regions using the IVC priority control and the lift amount priority control.

As shown in Fig. 4, for control of the valve opening characteristics of the intake valve, the HC emission amount becomes a constraint condition in the region at the low load side, and the smoke emission amount becomes a constraint condition in the region at the high load side. Accordingly, in the low-load and low-rotation region, the IVC priority control that puts priority on compliance of the closing timing IVC to the target value is desirably selected in order to suppress worsening of the HC emission amount at the transition time.

Further, even in the low load region, in the high rotation region with the engine speed of a predetermined speed or more, if the IVC priority control is performed, excessive increase of the swirl strength and insufficiency of the compression end pressure that are associated with reduction of the lift amount may occur as described above. Accordingly, in the low-load and high-rotation region, enhancing the compliance of the lift amount to the target value at the transition time resultantly leads to suppression of worsening of the HC emission amount, and therefore, the lift amount priority control is desirably selected.

On the other hand, if the IVC priority control is performed in the region at the high load side, the smoke emission amount is worsened due to reduction of the cylinder inflow fresh air amount associated with reduction of the lift amount, as described above. Accordingly, in the high load region, the lift amount priority control that enhances compliance of the lift amount to the target value at the transition time is desirably selected.

Thus, in the present embodiment, which control of the IVC priority control and the lift amount priority control is selected and performed is determined at the transition time based on the comparison result of an estimated value SMOKEcal of a smoke emission amount in the transition time and a predetermined SMOKE threshold value, as will be described later with reference to the following Fig. 5.

Fig. 5 is a flowchart showing a control routine which the ECU 60 executes in the present first embodiment in order to realize the above described function.

In the routine shown in Fig. 5, it is first determined whether or not a target value IVOtrg of the opening timing of the intake valve is not equal to an actual IVO (step 100). The actual IVO that is the actual value of the opening timing (IVO) can be calculated based on the rotation phase of the intake cam which is sensed by the intake cam angle sensor 48.

When it is determined in the above described step 100 that the target value IVOtrg of the opening timing IVO of the intake valve is not equal to the actual IVO, the operation state can be determined as the transition time at which the operation state of the internal combustion engine 10 changes. In this case, it is subsequently determined whether or not the estimated value SMOKEcal of the smoke emission amount is larger than the predetermined SMOKE threshold value (step 102). The estimated value SMOKEcal of the smoke emission amount can be estimated based on a fuel injection timing, a fuel injection amount, an engine speed, an intake manifold pressure, an intake manifold temperature, the closing timing IVC of the intake valve, the opening timing IVO of the intake valve, a cooling water temperature, a lubricant oil temperature, and a compression end temperature or a compression end pressure that is estimated from the intake manifold pressure and/or the intake manifold temperature. Further, the above described SMOKE threshold value is a value that is set in advance as the threshold value for determining whether the operation region at the present time point is the region in which the smoke emission amount becomes a constraint condition or the region in which the HC emission amount becomes a constraint condition in performing control of the valve opening characteristics of the intake valve.

When the estimated value SMOKEcal of the smoke emission amount is determined to be larger than the SMOKE threshold value in the above described step 102, the lift amount priority control is selected and executed (step 104). On the other hand, when the estimated value SMOKEcal of the smoke emission amount is determined to be the SMOKE threshold value or less in the above described step 102, it is subsequently determined whether or not the present operation region is a high rotation region in which the engine speed is a predetermined value or more (step 106). The above described predetermined value of the engine speed in the present step 106 is a value that is set in advance as the threshold value for determining whether the present operation region is the high rotation region in which worsening of the HC emission amount is feared, which is caused by excessive increase of the swirl strength and insufficiency of the compression end pressure, due to reduction of the lift amount associated with execution of the IVC priority control.

When it is determined that the present operation region is not a high rotation region as a result of the above, the IVC priority control is selected and executed (step 108). On the other hand, when the present operation region is determined to be the high rotation region in the above described step 106, the lift amount priority control is selected and executed (step 104).

According to the routine shown in Fig. 5 described above, it is determined which control of the IVC priority control and the lift amount priority control is selected and executed at the transition time, based on the comparison result of the estimated value SMOKEcal of the smoke emission amount in the transition time and the predetermined SMOKE threshold value. As a result, out of the IVC priority control and the lift amount priority control, the control which is more effective in the present operation region in reducing the exhaust emission at the transition time is selected and executed. This makes it possible to favorably suppress worsening of the exhaust emission (HC) due to the deviation of the closing timing IVC of the intake valve with respect to the target value, which is caused by the difference in response speed of the variable phase mechanism and the variable lift amount mechanism, and worsening of the exhaust emission (smoke (high load region) or HC (low-load and high-rotation region)) due to the deviation of the lift amount of the intake valve with respect to the target value, which occurs in the case of performing correction of the above described deviation of the closing timing IVC of the intake valve, irrespective of the operation region of the internal combustion engine 10.

Here, with reference to a control example shown in Fig. 6, an operation at the time of execution of the routine shown in the above described Fig. 5 and the effect thereof will be described in more detail. The control example shown in Fig. 6 is the example at an acceleration time of the internal combustion engine 10 (more specifically, at a time of shift from the low-load and low-rotation region to the high-load and low-rotation region), as shown in Fig. 6(A).

A time period from a time point t0 at which acceleration is started, to a time point t1 is a time period in which the operation region of the internal combustion engine 10 is in the low load region, and the smoke emission amount (estimated value SMOKEcal) is the SMOKE threshold value or less as shown in Fig. 6(E). During this time period, the IVC priority control is executed, and thereby, the operating angle is corrected in order to eliminate the deviation of the closing timing IVC, as shown in Fig. 6(C) and Fig. 6(D). Thereby, as compared with the case in which the IVC priority control is not performed (broken line), worsening of the HC emission amount is suppressed as shown in Fig. 6(F). Further, the low load region is an operation region with a relatively small smoke emission amount, and therefore, even if the IVC priority control is performed with priority put on suppression of worsening of the HC emission amount during this time period, worsening of the smoke emission amount can be said as being at an allowable level, as shown in Fig. 6(E).

Thereafter, when the smoke emission amount (estimated value SMOKEcal) reaches the SMOKE threshold value (that is, in the case of reaching the high load region in which priority has to be put on suppression of worsening of the smoke emission amount) at the time point t1, the IVC priority control is changed to the lift amount priority control, and the response speed of the operating angle (lift amount) with respect to the target value is enhanced, as shown in Fig. 6(C) and Fig. 6(D). Thereby, as shown in Fig. 6(E), as compared with the case in which the lift amount priority control is not performed (broken line), worsening of the smoke emission amount is suppressed. Further, the high-load and low-rotation region is the operation region with a relatively small HC emission amount, and therefore, even when the lift amount priority control is performed with priority put on suppression of worsening of the smoke emission amount after the time passes the time point t1, worsening of the HC emission amount can be said as being at an allowable level as shown in Fig. 6(F).

As described above with reference to Fig. 6, according to the routine shown in the above described Fig. 5, while the difference in response speed between the variable phase mechanism and the variable lift amount mechanism is considered, the valve opening characteristics of the intake valve can be controlled to a suitable target value at each of the time points, in the transition time. Therefore, in each of the operation regions of the internal combustion engine 10 which changes at the transition time, the respective emission amounts of HC and smoke can be simultaneously reduced.

Further, according to the routine shown in the above described Fig. 5, even when the estimated value SMOKEcal of the smoke emission amount is the SMOKE threshold value or less, the lift amount priority control is executed instead of the IVC priority control in the high rotation region. In this manner, the compliance of the lift amount to the target value is enhanced in the high rotation region, whereby excessive increase of the swirl strength and the like are avoided and reduction of the HC emission amount can be achieved.

It is noted that in the aforementioned first embodiment, the ECU 60 controls the rotation phase of the intake cam, and the lift amount and the operating angle of the intake valve by using the variable phase mechanism and the variable lift amount mechanism which are included by the intake variable valve operating mechanism 44, whereby the "intake valve control means" in the first aspect of the present invention is realized, and the ECU 60 executes the processing of the above described steps 102 to 108, whereby the "priority control executing means" in the first aspect of the present invention is realized.

Further, the ECU 60 executes the processing of the above described step 102, whereby the "smoke estimating means" in the second aspect of the present invention is realized.

### Second Embodiment

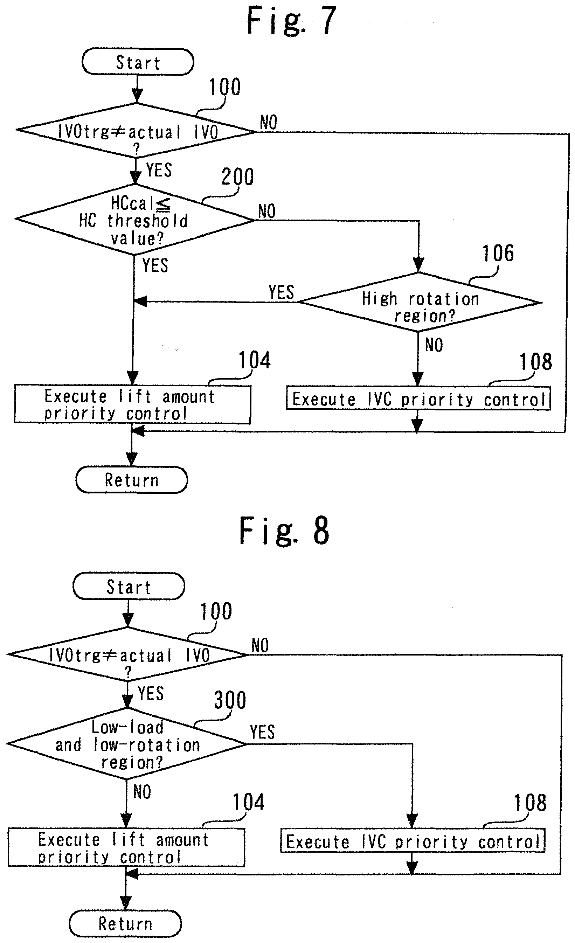

Next, a second embodiment of the present invention will be described with reference to Fig. 7.

A system of the present embodiment can be realized by causing the ECU 60 to execute a routine shown in Fig. 7 which will be described later instead of the routine shown in Fig. 5, by using the hardware configuration shown in Fig. 1.

In the system of the aforementioned first embodiment, it is determined which control out of the IVC priority control and the lift amount priority control is selected and performed at the transition time, based on the comparison result of the estimated value SMOKEcal of the smoke emission amount in the transition time and the predetermined SMOKE threshold value. In contrast with this, the system of the present embodiment has the feature in that which control out of the IVC priority control and the lift amount priority control is selected and performed at the transition time based on a comparison result of an estimated value HCcal of the HC emission amount in the transition time and a predetermined HC threshold value.

Fig. 7 is a flowchart showing a control routine executed by the ECU 60 in the present second embodiment in order to realize the above described function. In Fig. 7, the same steps as the steps shown in Fig. 5 in the first embodiment will be assigned with the same reference numerals, and the description thereof will be omitted or simplified.

In the routine shown in Fig. 7, when it is determined that the target value IVOtrg of the opening timing of the intake valve is not equal to the actual IVO in step 100 (that is, when it is determined to be the transition time), it is subsequently determined whether or not the estimated value HCcal of the HC emission amount is the predetermined HC threshold value or less (step 200). The estimated value HCcal of the HC emission amount can be estimated based on the fuel injection time, the fuel injection amount, the engine speed, the intake manifold pressure, the intake manifold temperature, the closing timing IVC of the intake valve, the opening timing IVO of the intake valve, the cooling water temperature, the lubricant oil temperature, and the compression end temperature or the compression end pressure that is estimated from the intake manifold pressure and/or the intake manifold temperature. Further, the above described HC threshold value (see Fig. 6(F)) is a value that is set in advance as the threshold value for determining whether the operation region at the present time point is the region in which the HC emission amount becomes a constraint condition or the region in which the smoke emission amount becomes a constraint condition in performing control of the valve opening characteristics of the intake valve.

When it is determined that the estimated value HCcal of the HC emission amount is the HC threshold value or less in the above described step 200, the lift amount priority control is selected and executed (step 104). On the other hand, when it is determined that the estimated value HCcal of the HC emission amount is larger than the HC threshold value in the above described step 200, it is subsequently determined whether or not the present operation region is the high rotation region (step 106). When it is determined that the present operation region is not the high rotation region as a result thereof, the IVC priority control is selected and executed (step 108), whereas when it is determined that the present operation region is a high rotation region in the above described step 106, the lift amount priority control is selected and executed (step 104).

According to the routine shown in Fig. 7 which is described above, which control out of the IVC priority control and the lift amount priority control is selected and performed is determined at the transition time based on the comparison result of the estimated value HCcal of the HC emission amount at the transition time and the predetermined HC threshold value. According to the method like this, the control that is more effective in the present operation region in reducing the exhaust emission at the transition time is selected and executed, out of the IVC priority control and the lift amount priority control, as in the method of the first embodiment that is described above. This makes it possible to favorably suppress worsening of the exhaust emission (HC) due to the deviation of the closing timing IVC of the intake valve with respect to the target value due to the difference in response speed between the variable phase mechanism and the variable lift amount mechanism, and worsening of the exhaust emission (smoke or HC) due to the deviation of the lift amount of the intake valve with respect to the target value, which occurs in the case of performing correction of the above described deviation of the closing timing IVC of the intake valve, irrespective of the operation region of the internal combustion engine 10.

It is noted that in the aforementioned first embodiment, the ECU 60 executes the processing of the above described step 200, whereby the "HC estimating means" in the fourth aspect of the present invention is realized.

### Third Embodiment

Next, a third embodiment of the present invention will be described with reference to Fig. 8.

A system of the present embodiment can be realized by causing the ECU 60 to execute a routine shown in Fig. 8 which will be described later instead of the routine shown in Fig. 5, by using the hardware configuration shown in Fig. 1.

In the system of the aforementioned first or second embodiment, it is determined which control out of the IVC priority control and the lift amount priority control is selected and performed at the transition time, based on the comparison result of the estimated value SMOKEcal (or HCcal) of the smoke (or HC) emission amount in the transition time and the predetermined SMOKE threshold value (or HC threshold value). In contrast with this, the system of the present embodiment has the feature in that it is determined which control out of the IVC priority control and the lift amount priority control is selected and performed at the transition time, based on a result of determination of an operation region of the internal combustion engine 10 in the transition time.

Fig. 8 is a flowchart showing a control routine executed by the ECU 60 in the present third embodiment in order to realize the above described function. In Fig. 8, the same steps as the steps shown in Fig. 5 in the first embodiment will be assigned with the same reference numerals, and the description thereof will be omitted or simplified.

In the routine shown in Fig. 8, when it is determined that the target value IVOtrg of the opening timing IVO of the intake valve is not equal to the actual IVO in step 100 (that is, when it is determined to be the transition time), it is subsequently determined whether or not the present operation region is the low-load and low-rotation region in which the engine load (fuel injection amount) is a predetermined value or less and the engine speed is a predetermined value or less (step 300). The above described predetermined value of the engine load in the present step 300 is a value that is set in advance as a threshold value for determining whether the present operation region is a region at a low load side in which the HC emission amount becomes a constraint condition or a region at a high load side in which the smoke emission amount becomes a constraint condition, for control of the valve opening characteristics of the intake valve. Here, when the cooling water temperature of the internal combustion engine 10 becomes low, the combustion stability of the internal combustion engine 10 is difficult to be ensured, and therefore, the load region in which the HC emission amount becomes the constraint condition is enlarged. Accordingly, for example, the above described predetermined value of the engine load may be set so that the above described predetermined value of the engine load becomes larger as the cooling water temperature of the internal combustion engine 10 becomes lower. Further, the above described predetermined value of the engine speed in the present step 300 is a value which is set similarly to the predetermined value in the above described step 106.

When it is determined that the present operation region is the low-load and low-rotation region in the above described step 300, the IVC priority control is selected and executed (step 108). On the other hand, when it is determined that the present operation region is not the low-load and low-rotation region in the above described step 300 (more specifically, when the present operation region can be determined as a high load region or a high rotation region other than the above described low-load and low-rotation region), the lift amount priority control is selected and executed (step 104).

According to the routine shown in Fig. 8 described above, it is determined which control out of the IVC priority control and the lift amount priority control is selected and performed at the transition time, based on the determination result of the operation region of the internal combustion engine 10 in the transition time. More specifically, when the present operation region is the low-load and low-rotation region, the IVC priority control is selected, and thereby, worsening of the HC emission amount caused by the deviation of the closing timing IVC in the transition time can be suppressed. Further, in the high load region, the lift amount priority control is selected, whereby the cylinder inflow fresh air quantity in the transition time is secured, and worsening of the smoke emission amount can be suppressed. Furthermore, in the low-load and high-rotation region, the lift amount priority control is selected, whereby excessive increase of the swirl strength and the like in the transition time are avoided, and worsening of the HC emission amount can be suppressed.

### Comparative Example

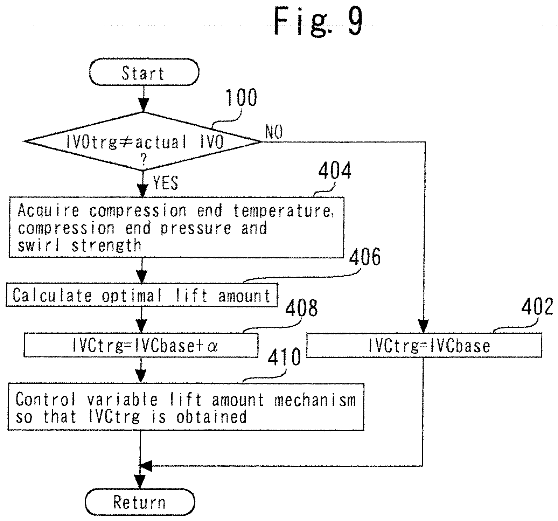

Next, a comparative example will be described with reference to Figs. 9 to 11.

A system of the present comparative example can be realized by causing the ECU 60 to execute a routine shown in Fig. 9 which will be described later instead of the routine shown in Fig. 5, by using the hardware configuration shown in Fig. 1.

Cancelled

In the present comparative example, an optimal lift amount of the intake valve which can reduce the HC emission amount the most in the transition time is calculated based on the respective estimated values of the compression end temperature, the compression end pressure and the swirl strength that are in-cylinder state quantities expressing the in-cylinder state of the internal combustion engine 10. The closing timing IVC at the time when the optimal lift amount is obtained by regulation of the variable lift amount mechanism (base value IVCbase corresponding to the operation region + correction value α) is made to be the target value IVCtrg. The optimal lift amount like this and the target value IVCtrg that reflects this are successively calculated at the transition time, and regulation of the lift amount and the operating angle by the variable lift amount mechanism is performed so that the target value IVCtrg is achieved.

Fig. 9 is a flowchart showing a control routine executed by the ECU 60 in the present comparative example in order to realize the above described function. In Fig. 9, the same step as the step shown in Fig. 5 in the first embodiment will be assigned with the same reference numeral, and the description thereof will be omitted or simplified.

In the routine shown in Fig. 9, when it is determined that the target value IVOtrg of the opening timing IVO of the intake valve is equal to the actual IVO in step 100 (that is, when it is determined to be a steady state operation time), the target value TVCtrg of the closing timing IVC is set at a base value (value at the steady state time) IVCbase corresponding to the present operation region (step 402).

On the other hand, when it is determined that the target value IVOtrg of the opening timing IVO of the intake valve is not equal to the actual IVO in the above described step 100 (that is, when it is determined to be the transition time), the estimated values of the compression end temperature, the compression end pressure and the swirl strength that are the in-cylinder state quantities are respectively acquired next (step 404).

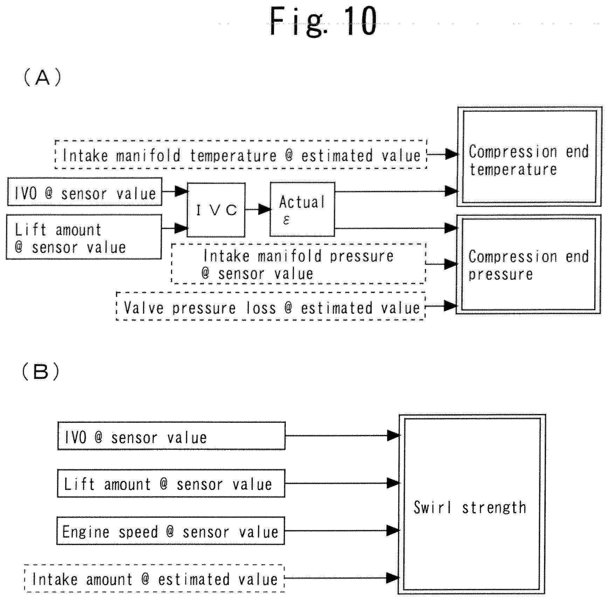

Fig. 10 is a view for explaining respective estimation methods of the compression end temperature, the compression end pressure and the swirl strength.

First, the compression end temperature is calculated in accordance with a predetermined relational expression based on the estimated value of the intake manifold temperature and an actual compression ratio ε as shown in Fig. 10(A). More specifically, the intake manifold temperature can be estimated in accordance with the function with the engine speed, the fuel injection amount, the supercharging pressure (intake manifold pressure), the fresh air quantity (intake air quantity), the EGR rate, a VN opening and the like as variables. Further, the actual compression ratio ε can be calculated based on the closing timing IVC of the intake valve. The closing timing IVC can be calculated based on the opening timing IVO of the intake valve that is acquired by using the intake cam angle sensor 48 and the lift amount (operating angle) of the intake valve that is acquired by using the lift amount sensor 52.

The compression end pressure is calculated in accordance with a predetermined relational expression based on the actual compression ratio ε, the intake manifold pressure acquired by the intake pressure sensor 56, and the estimated value of valve (intake valve) pressure loss, as shown in Fig. 10(A). More specifically, the valve pressure loss can be estimated in accordance with the function with the lift amount of the intake valve, the engine speed and the intake air quantity as the variables.

The swirl strength is calculated in accordance with a predetermined relational expression based on the opening timing IVO of the intake valve, the lift amount of the intake valve, the engine speed and the intake quantity (sum of the fresh air quantity and the EGR gas quantity) as shown in Fig. 10(B). More specifically, the intake quantity can be estimated in accordance with the function with the engine speed, the fuel injection amount, the supercharging pressure (intake manifold pressure), the fresh air quantity (intake air quantity), the EGR rate, the VN opening and the like as the variables.

Next, based on the compression end temperature, the compression end pressure and the swirl strength that are acquired in the above described step 404, the optimal lift amount of the intake valve that can reduce the HC emission amount in the transition time the most is calculated (step 406).

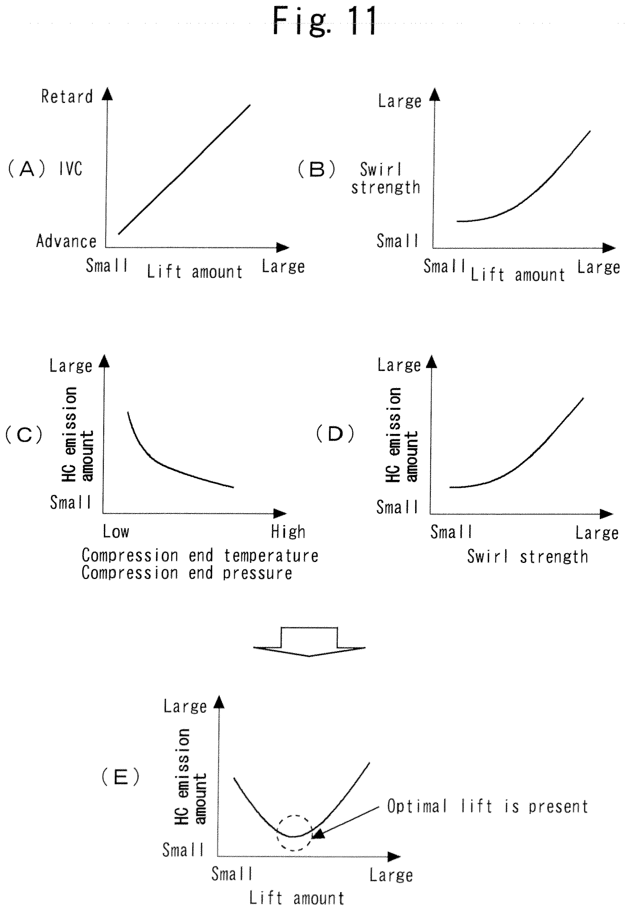

Fig. 11 is a diagram for explaining a calculating method of the optimal lift amount of the intake valve in the transition time. As shown in Fig. 11 (A), there is the relationship in which as the lift amount becomes larger, the retard angle amount of the closing timing IVC becomes larger between the lift amount and the closing timing IVC that are controlled by the variable lift amount mechanism of the present embodiment. Further, as shown in Fig. 11(B), as the lift amount becomes larger, the swirl strength becomes higher. As shown in Fig. 11(C), as the compression end temperature or the compression end pressure becomes higher, the HC emission amount becomes smaller. As shown in Fig. 11 (D), as the swirl strength becomes higher, the HC emission amount becomes larger.

Based on the relations shown in the above described Fig. 11(A) to Fig. 11(D), the relation of the HC emission amount and the lift amount (closing timing IVC) of the intake valve can be obtained as shown in Fig. 11(E). According to the relation shown in Fig. 11(E), it is found out that the optimal lift amount of the intake valve is present, which can reduce the HC emission amount in the transition time the most. In the present step 406, the optimal lift amount of the intake valve is calculated in accordance with the predetermined relational expression based on the respective estimated values of the present compression end temperature, the compression end pressure and the swirl strength in the transition time by using the relations shown in the respective diagrams of Fig. 11.

Next, the closing timing IVC at the time when the optimal lift amount calculated in the above described step 406 is obtained by regulation of the variable lift amount mechanism (base value (value at the steady state time) corresponding to the operation region IVCbase + correction value α) is set at the target value IVCtrg (step 408). According to the optimal lift amount calculated in the above described step 406, the above described correction value α may be zero depending on the values of the in-cylinder state quantities such as the compression end temperature. When the above described correction value α becomes zero, the IVC priority control is performed.

Next, in order that the target value IVCtrg calculated in the above described step 408 is obtained, the closing timing IVC is controlled by regulation of the lift amount and the operating angle of the intake valve by the variable lift amount mechanism (step 410).

According to the routine shown in Fig. 9 described above, at the transition time, the optimal lift amount of the intake valve and the target value IVCtrg that reflects this are sequentially calculated based on the compression end temperature, the compression end pressure and the swirl strength. Subsequently, the closing timing IVC is controlled by regulation of the lift amount and the operating angle by the variable lift amount mechanism so that the target value IVCtrg is realized. According to the method like this, the IVC priority control can be said to be executed as the control that is more effective for reduction of the HC emission amount if the above described correction value α becomes zero in response to the calculation result of the optimal lift amount based on the in-cylinder state quantities such as the present compression end temperature. Further, when the above described correction value α becomes the value other than zero, optimization of the lift amount in the transition time has priority over correction of the deviation of the closing timing IVC. More specifically, in this case, as the control which is more effective for reduction of the HC emission amount, the lift amount priority control can be said to be executed.

As described above, the method of the routine shown in the above described Fig. 9 also can favorably suppress worsening of the HC emission amount due to a deviation of the closing timing IVC of the intake valve with respect to the target value, which is caused by the difference in response speed between the variable phase mechanism and the variable lift amount mechanism, and worsening of the HC emission amount due to a deviation of the lift amount of the intake valve with respect to the target value, which occurs in the case of performing correction of the above described deviation of the closing timing IVC of the intake valve, irrespective of the operation region of the internal combustion engine 10. Further, according to the method of the present comparative example, when the above described correction value α becomes the value other than zero (more specifically, when the lift amount priority control is executed), the lift amount is controlled so that the optimal lift amount that can reduce the HC emission amount the most can be obtained in accordance with the values of the present in-cylinder state quantities. Therefore, worsening of the HC emission amount in the transition time can be more accurately suppressed.

## Claims

1. A control apparatus for an internal combustion engine, comprising:
a variable phase mechanism (44) for making a rotation phase of an intake cam that drives an intake valve variable with respect to a rotation phase of a crankshaft;
a variable lift amount mechanism (44), that is higher in response speed than the variable phase mechanism, for making a lift amount and an operating angle of the intake valve variable;
intake valve control means for controlling, at a transition time at which an operation state of the internal combustion engine (10) changes, the rotation phase of the intake cam and the lift amount and the operating angle of the intake valve by using both of the variable phase mechanism (44) and the variable lift amount mechanism (44) so that a valve opening characteristic of the intake valve becomes a target valve opening characteristic,
the control apparatus being **characterized in that** it further comprises means for determining engine operation region and/or for estimating exhaust emission, and **in that** the intake valve control means includes priority control executing means for selecting and executing , out of a closing timing priority control that puts priority on compliance of a closing timing of the intake valve to a target value by regulation of the operating angle of the intake valve with use of the variable lift amount mechanism (44), and a lift amount priority control that puts priority on compliance of the lift amount of the intake valve to a target value with use of the variable lift amount mechanism (44), the most effective in suppressing an exhaust emission, based on the determined operating region and/or the estimated exhaust emission.

2. The control apparatus for an internal combustion engine according to claim 1, further comprising:
smoke estimating means that estimates an emission amount of smoke exhausted from the internal combustion engine (10),
wherein the priority control executing means selects and executes the lift amount priority control, when the emission amount of the smoke is larger than a predetermined value.

3. The control apparatus for an internal combustion engine according to claim 2,
wherein when an engine speed is a predetermined value or more in a case in which the emission amount of the smoke is the predetermined value or less, the priority control executing means selects and executes the lift amount priority control instead of the closing timing priority control.

4. The control apparatus for an internal combustion engine according to claim 1, further comprising:
HC estimating means that estimates an emission amount of HC exhausted from the internal combustion engine (10),
wherein when the emission amount of the HC is larger than a predetermined value, the priority control executing means selects and executes the closing timing priority control.

5. The control apparatus for an internal combustion engine according to claim 4,
wherein when an engine speed is a predetermined value or more in a case in which the emission amount of the HC is larger than the predetermined value, the priority control executing means selects and executes the lift amount priority control instead of the closing timing priority control.

6. The control apparatus for an internal combustion engine according to claim 1,
wherein the priority control executing means is configured so as to select and execute the closing timing priority control in a low-load and low-rotation region of the internal combustion engine (10).

7. The control apparatus for an internal combustion engine according to claim 1 or 6,
wherein the priority control executing means is configured so as to select and execute the lift amount priority control in a high load region of the internal combustion engine (10).

8. The control apparatus for an internal combustion engine according to claim 1, 6 or 7,
wherein the priority control executing means is configured so as to select and execute the lift amount priority control in a high rotation region of the internal combustion engine (10).

## Patentansprüche

1. Steuerungsvorrichtung für einen Verbrennungsmotor, umfassend:
einen Phasenänderungsmechanismus (44), um eine Rotationsphase eines Einlassnockens, der ein Einlassventil ansteuert, mit Bezug auf eine Rotationsphase einer Kurbelwelle variabel zu machen,
einen Hubbetragsänderungsmechanismus (44), der eine schnellere Ansprechgeschwindigkeit hat als der Phasenänderungsmechanismus, um einen Hubbetrag und einen Arbeitswinkel des Einlassventils variabel zu machen,
ein Einlassventilsteuerungsmittel zum Steuern, an einem Übergangszeitpunkt, an dem sich ein Betriebszustand des Verbrennungsmotors (10) ändert, der Rotationsphase des Einlassnockens und des Hubbetrages und des Arbeitswinkels des Einlassventils unter Verwendung sowohl des Phasenänderungsmechanismus (44) als auch des Hubbetragsänderungsmechanismus (44) dergestalt, dass eine Ventilöffnungskennlinie des Einlassventils zu einer Ziel-Ventilöffnungskennlinie wird,
wobei die Steuerungsvorrichtung **dadurch gekennzeichnet ist, dass** sie ferner ein Mittel zum Bestimmen einer Motorbetriebsregion und/oder zum Schätzen einer Abgasemission umfasst, und dadurch, dass das Einlassventilsteuerungsmittel ein Prioritätssteuerungs-Ausführungsmittel enthält, um anhand der bestimmten Betätigungsregion und/oder der geschätzten Abgasemission aus einer Schließzeitprioritätssteuerung, die Priorität darauf legt, dass eine Schließzeit des Einlassventils einen Zielwert einhält, indem der Arbeitswinkel des Einlassventils mittels des Hubbetragsänderungsmechanismus (44) geregelt wird, und einer Hubbetragprioritätssteuerung, die Priorität darauf legt, dass der Hubbetrag des Einlassventils mittels des Hubbetragsänderungsmechanismus (44) einen Zielwert einhält, die effektivste für das Unterdrücken einer Abgasemission auszuwählen und auszuführen.

2. Steuerungsvorrichtung für einen Verbrennungsmotor nach Anspruch 1, ferner umfassend:
ein Rauchschätzmittel, das einen Emissionsbetrag von Rauch schätzt, der von dem Verbrennungsmotor (10) abgegeben wird,
wobei das Prioritätssteuerungs-Ausführungsmittel die Hubbetragprioritätssteuerung auswählt und ausführt, wenn der Emissionsbetrag des Rauchs größer ist als ein zuvor festgelegter Wert.

3. Steuerungsvorrichtung für einen Verbrennungsmotor nach Anspruch 2,
wobei, wenn eine Motordrehzahl in einem Fall, wo der Emissionsbetrag des Rauchs nicht größer als der zuvor festgelegte Wert ist, mindestens ein zuvor festgelegter Wert ist, das Prioritätssteuerungs-Ausführungsmittel die Hubbetragprioritätssteuerung anstelle der Schließzeitprioritätssteuerung auswählt und ausführt.

4. Steuerungsvorrichtung für einen Verbrennungsmotor nach Anspruch 1, ferner umfassend:
ein HC-Schätzmittel, das einen Emissionsbetrag von HC schätzt, das von dem Verbrennungsmotor (10) abgegeben wird,
wobei, wenn der Emissionsbetrag des HC größer ist als ein zuvor festgelegter Wert, das Prioritätssteuerungs-Ausführungsmittel die Schließzeitprioritätssteuerung auswählt und ausführt.

5. Steuerungsvorrichtung für einen Verbrennungsmotor nach Anspruch 4,
wobei, wenn eine Motordrehzahl in einem Fall, wo der Emissionsbetrag des HC größer als der zuvor festgelegte Wert ist, mindestens ein zuvor festgelegter Wert ist, das Prioritätssteuerungs-Ausführungsmittel die Hubbetragprioritätssteuerung anstelle der Schließzeitprioritätssteuerung auswählt und ausführt.

6. Steuerungsvorrichtung für einen Verbrennungsmotor nach Anspruch 1,
wobei das Prioritätssteuerungs-Ausführungsmittel dafür konfiguriert ist, dass es die Schließzeitprioritätssteuerung in einer Niedriglast- und Niedrigdrehzahlregion des Verbrennungsmotors (10) auswählt und ausführt.

7. Steuerungsvorrichtung für einen Verbrennungsmotor nach Anspruch 1 oder 6,
wobei das Prioritätssteuerungs-Ausführungsmittel dafür konfiguriert ist, dass es die Hubbetragprioritätssteuerung in einer Hochlastregion des Verbrennungsmotors (10) auswählt und ausführt.

8. Steuerungsvorrichtung für einen Verbrennungsmotor nach Anspruch 1, 6 oder 7,
wobei das Prioritätssteuerungs-Ausführungsmittel dafür konfiguriert ist, dass es die Hubbetragprioritätssteuerung in einer Hochdrehzahlregion des Verbrennungsmotors (10) auswählt und ausführt.

## Revendications

1. Appareil de commande pour un moteur à combustion interne, comportant :
un mécanisme de phase variable (44) destiné à rendre une phase de rotation d'une came d'admission qui entraîne une soupape d'admission variable par rapport à une phase de rotation d'un vilebrequin ;
un mécanisme à valeur de levée variable (44), qui est d'une vitesse de réaction plus élevée que le mécanisme de phase variable, destiné à rendre variables une valeur de levée et un angle d'actionnement de la soupape d'admission ;
des moyens de commande de soupape d'admission destinés à commander, à un temps de transition où un état de changement du moteur à combustion interne (10) change, la phase de rotation de la came d'admission et la valeur de levée et l'angle d'actionnement de la soupape d'admission en utilisant à la fois le mécanisme de phase variable (44) et le mécanisme à valeur de levée variable (44) de telle sorte qu'une caractéristique d'ouverture de soupape de la soupape d'admission devient une caractéristique cible d'ouverture de soupape,
l'appareil de commande étant **caractérisé en ce qu'**il comporte en outre des moyens destinés à déterminer une zone de fonctionnement de fonctionnement et/ou destinés à estimer une émission d'échappement, et **en ce que** les moyens de commande de soupape d'admission comprennent des moyens d'exécution de commande de priorité destinés à sélectionner et exécuter, parmi une commande de priorité de calage de fermeture qui met la priorité sur la conformité d'un calage de fermeture de la soupape d'admission avec une valeur cible par régulation de l'angle d'actionnement de la soupape d'admission avec utilisation du mécanisme à valeur de levée variable (44), et une commande de priorité de valeur de levée qui met la priorité sur la conformité de la valeur de levée de la soupape d'admission à une valeur cible avec l'utilisation du mécanisme à valeur de levée variable (44), la plus efficace dans la suppression d'une émission d'échappement, sur la base de la zone de fonctionnement déterminée et/ou de l'émission d'échappement prévue.

2. Appareil de commande pour un moteur à combustion interne selon la revendication 1, comportant en outre :
des moyens d'estimation de fumée qui estiment une quantité d'émission de fumée libérée par le moteur à combustion interne (10),
dans lequel les moyens d'exécution de commande de priorité sélectionnent et exécutent la commande de priorité de valeur de levée, quand la quantité d'émission de la fumée est plus grande qu'une valeur prédéterminée.

3. Appareil de commande pour un moteur à combustion interne selon la revendication 2,
dans lequel quand une vitesse de moteur est une valeur prédéterminée ou plus dans un cas dans lequel la quantité d'émission de la fumée est la valeur prédéterminée ou moins, les moyens d'exécution de commande de priorité sélectionnent et exécutent la commande de priorité de valeur de levée au lieu de la commande de priorité de calage de fermeture.

4. Appareil de commande pour un moteur à combustion interne selon la revendication 1, comportant en outre :
des moyens d'estimation de HC qui estiment une quantité d'émission de HC libérée par le moteur à combustion interne (10),
dans lequel quand la quantité d'émission du HC est plus grande qu'une valeur prédéterminée, les moyens d'exécution de commande de priorité sélectionnent et exécutent la commande de priorité de calage de fermeture.

5. Appareil de commande pour un moteur à combustion interne selon la revendication 4,
dans lequel quand une vitesse de moteur est une valeur prédéterminée ou plus dans un cas dans lequel la quantité d'émission du HC est plus grande que la valeur prédéterminée, les moyens d'exécution de commande de priorité sélectionnent et exécutent la commande de priorité de valeur de levée au lieu de la commande de priorité de calage de fermeture.

6. Appareil de commande pour un moteur à combustion interne selon la revendication 1,
dans lequel les moyens d'exécution de commande de priorité sont configurés de façon à sélectionner et exécuter la commande de priorité de calage de fermeture dans une zone de faible charge et de faible rotation du moteur à combustion interne (10).

7. Appareil de commande pour un moteur à combustion interne selon la revendication 1 ou 6,
dans lequel les moyens d'exécution de commande de priorité sont configurés de façon à sélectionner et exécuter la commande de priorité de valeur de levée dans une zone de forte charge du moteur à combustion interne (10).

8. Appareil de commande pour un moteur à combustion interne selon la revendication 1, 6 ou 7,
dans lequel les moyens d'exécution de commande de priorité sont configurés de façon à sélectionner et exécuter la commande de priorité de valeur de levée dans une zone de rotation élevée du moteur à combustion interne (10).
